# EUROPEAN PATENT APPLICATION

(11) **EP 4 671 324 A1**
(43) Date of publication of application: **31.12.2025**
(21) Application number: 24760377.2
(22) Date of filing: 20.02.2024
(51) Int. Cl.: C08L 67/00, C08K 5/29, C08L 23/00, C08L 51/04, C08L 63/10

(54) **POLYESTER RESIN COMPOSITION AND POLYESTER RESIN MOLDED ARTICLE**

(30) Priority: 22.02.2023 JP 2023025802
(71) Applicant: Nitto Denko Corporation, Osaka 567-8680 (JP)
(72) Inventor: ISHIGURO, Shigeki, Ibaraki-shi, Osaka 567-8680 (JP); YAMADA, Yosuke, Ibaraki-shi, Osaka 567-8680 (JP); YAMAMOTO, Takayuki, Ibaraki-shi, Osaka 567-8680 (JP)
(74) Representative: Hoffmann Eitle
(86) International application number: PCT/JP2024/006108
(87) International publication number: WO 2024/177079

(57) **Abstract**

Provided is a polyester-based resin composition capable of expressing excellent melting properties and excellent mechanical properties. Also provided is a polyester-based resin molded article obtained by molding such polyester-based resin composition. The polyester-based resin composition according to an embodiment of the present invention is a polyester-based resin composition including: a polyester-based resin (A); a polyolefin-based resin (B); a glycidyl group-containing resin (C); and a polycarbodiimide (D), wherein the glycidyl group-containing resin (C) contains 2 wt% to 30 wt% of a glycidyl methacrylate unit in a molecule thereof.

## Description

### TECHNICAL FIELD

The present invention relates to a polyester-based resin composition and a polyester-based resin molded article.

### BACKGROUND ART

Hitherto, a polyester-based resin has been alloyed with a polyolefin-based resin for improvements in physical properties of the polyester-based resin. However, in the alloying of the polyester-based resin with the polyolefin-based resin, reductions in physical properties such as a reduction in toughness are caused by a difference in polarity between the polyolefin-based resin and the polyester-based resin. Accordingly, the improvement of the polyolefin-based resin and the addition of a compatibilizer have been investigated.

For example, there have been reported technologies in which a modified polyolefin-based resin is used as a polyolefin-based resin and in which a modified polyolefin-based resin is added as a compatibilizer (Patent Literatures 1 to 4). In addition, there have been reported technologies in which an acrylic-styrene copolymer having an epoxy group and an ethylene-methacrylic acid copolymer resin (NUCREL 1207) are used as compatibilizers (Patent Literatures 5 and 6).

However, polyester-based resins obtained by applying the above-mentioned technologies still have room for improvement from the viewpoint of melting properties and mechanical properties.

In addition, a polycarbodiimide having a carbodiimide group reacts with a terminal carboxylic acid or hydroxy group of a polyester-based resin, and hence the polycarbodiimide is used as a hydrolysis-resistant agent or a chain extender (Patent Literatures 7 to 9).

### CITATION LIST

### Patent Literature

Patent Literature 1: JP 2005-343971 A
Patent Literature 2: JP 2004-18592 A
Patent Literature 3: JP 2005-23095 A
Patent Literature 4: JP 2005-105055 A
Patent Literature 5: JP 2005-200534 A
Patent Literature 6: JP 2012-111818 A
Patent Literature 7: JP 01-174557 A
Patent Literature 8: JP 2003-313410 A
Patent Literature 9: JP 2016-56314 A

### SUMMARY OF INVENTION

### Technical Problem

An object of the present invention is to provide a polyester-based resin composition capable of expressing excellent melting properties and excellent mechanical properties. Another object of the present invention is to provide a polyester-based resin molded article obtained by molding such polyester-based resin composition.

### Solution to Problem

[1] According to an embodiment of the present invention, there is provided a polyester-based resin composition, including: a polyester-based resin (A); a polyolefin-based resin (B); a glycidyl group-containing resin (C); and a polycarbodiimide (D), wherein the glycidyl group-containing resin (C) contains 2 wt% to 30 wt% of a glycidyl methacrylate unit in a molecule thereof.
[2] In the polyester-based resin composition according to Item [1], the glycidyl group-containing resin (C) may have a MFR at a temperature of 190°C and a load of 2.16 kg of from 1 g/10 min to 500 g/10 min.
[3] In the polyester-based resin composition according to Item [1] or [2], the glycidyl group-containing resin (C) may contain an ethylene unit.
[4] In the polyester-based resin composition according to any one of Items [1] to [3], a total content ratio of the polyester-based resin (A), the polyolefin-based resin (B), the glycidyl group-containing resin (C), and the polycarbodiimide (D) in the polyester-based resin composition may be more than 90 wt%.
[5] In the polyester-based resin composition according to any one of Items [1] to [4], a content ratio of the polyester-based resin (A) in a sum of the polyester-based resin (A), the polyolefin-based resin (B), and the glycidyl group-containing resin (C) may be from 50 wt% to 98 wt%.
[6] In the polyester-based resin composition according to any one of Items [1] to [5], a content ratio of the polyolefin-based resin (B) in a sum of the polyester-based resin (A), the polyolefin-based resin (B), and the glycidyl group-containing resin (C) may be from 1 wt% to 45 wt%.
[7] In the polyester-based resin composition according to any one of Items [1] to [6], a content ratio of the glycidyl group-containing resin (C) in a sum of the polyester-based resin (A), the polyolefin-based resin (B), and the glycidyl group-containing resin (C) may be from 0.1 wt% to 20 wt%.
[8] In the polyester-based resin composition according to any one of Items [1] to [7], an amount of the polycarbodiimide (D) may be from 0.1 part by weight to 3.0 parts by weight when a total amount of the polyester-based resin (A), the polyolefin-based resin (B), and the glycidyl group-containing resin (C) is 100 parts by weight.
[9] In the polyester-based resin composition according to any one of Items [1] to [8], the polyester-based resin (A) may have a MFR at a temperature of 285°C and a load of 2.16 kg of from 100 g/10 min to 300 g/10 min.
[10] In the polyester-based resin composition according to any one of Items [1] to [9], the polyester-based resin (A) may be polyethylene terephthalate.
[11] In the polyester-based resin composition according to any one of Items [1] to [10], the polyolefin-based resin (B) may be an ethylene-α-olefin copolymer.
[12] In the polyester-based resin composition according to Item [11], the polyolefin-based resin (B) may be a linear low-density polyethylene.
[13] In the polyester-based resin composition according to any one of Items [1] to [12], the polyolefin-based resin (B) may have a MFR at a temperature of 190°C and a load of 2.16 kg of from 0.5 g/10 min to 50 g/10 min.
[14] In the polyester-based resin composition according to any one of Items [1] to [13], the polycarbodiimide (D) may have a weight-average molecular weight of from 500 to 6000.
[15] In the polyester-based resin composition according to any one of Items [1] to [14], the polyester-based resin composition may include 0.5 wt% to 30 wt% of an impact modifier (E).
[16] In the polyester-based resin composition according to Item [15], the impact modifier (E) may be a core/shell-type structure having a core portion and a shell portion, and the core portion may contain a rubber component.
[17] According to an embodiment of the present invention, there is provided a polyester-based resin composition, including: a polyester-based resin (A); a polyolefin-based resin (B); a glycidyl group-containing resin (C); and an impact modifier (E), wherein the glycidyl group-containing resin (C) contains 2 wt% to 30 wt% of a glycidyl methacrylate unit in a molecule thereof.
[18] According to an embodiment of the present invention, there is provided a polyester-based resin molded article obtained by molding the polyester-based resin composition of any one of Items [1] to [17] by injection molding.

### Advantageous Effects of Invention

According to the present invention, there can be provided the polyester-based resin composition capable of expressing excellent melting properties and excellent mechanical properties. In addition, there can be provided the polyester-based resin molded article obtained by molding such polyester-based resin composition. According to the present invention, there can be provided the polyester-based resin composition capable of expressing excellent melting properties and excellent mechanical properties, and hence the polyester-based resin composition capable of expressing excellent melting properties and excellent mechanical properties can be formed by using, for example, a recycled PET as a raw material.

### DESCRIPTION OF EMBODIMENTS

When the expression "weight" is used herein, the expression may be replaced with "mass" that has been commonly used as an SI unit that represents a weight. On the contrary, when the expression "mass" is used herein, the expression may be replaced with "weight" that has hitherto been generally and commonly used as a unit of a weight.

Herein, the expression "(meth)acryl" means "acryl and/or methacryl," the expression "(meth)acrylate" means "acrylate and/or methacrylate," the expression "(meth)allyl" means "allyl and/or methallyl," and the expression "(meth)acrolein" means "acrolein and/or methacrolein."

### <<Polyester-based Resin Composition>>

A polyester-based resin composition according to one embodiment (I) of the present invention includes a polyester-based resin (A), a polyolefin-based resin (B), a glycidyl group-containing resin (C), and a polycarbodiimide (D). A polyester-based resin composition according to another embodiment (II) of the present invention includes a polyester-based resin (A), a polyolefin-based resin (B), a glycidyl group-containing resin (C), and an impact modifier (E). The expression "polyester-based resin composition according to the embodiment of the present invention" in the following description encompasses both of the polyester-based resin composition according to Embodiment (I) and the polyester-based resin composition according to Embodiment (II).

The present invention is based on the fact that a polyester-based resin composition (Embodiment (I)) essentially containing a combination of the polyester-based resin (A), the polyolefin-based resin (B), the glycidyl group-containing resin (C), and the polycarbodiimide (D) or a polyester-based resin composition (Embodiment (II)) essentially containing a combination of the polyester-based resin (A), the polyolefin-based resin (B), the glycidyl group-containing resin (C), and the impact modifier (E) can express excellent melting properties and excellent mechanical properties as compared to a related-art polyester-based resin composition. In particular, the present invention is based on the fact that when a specific glycidyl group-containing resin (C) is adopted in the above-mentioned combination, significantly excellent melting properties and significantly excellent mechanical properties can be expressed. Although there are some related-art polyester-based resin compositions that can express slight improvements in melting properties and improvements in mechanical properties, the improvements remain inadequate. The polyester-based resin composition according to the embodiment of the present invention can express effects of significantly excellent melting properties and significantly excellent mechanical properties, and can particularly express a significantly excellent toughness-improving effect.

The polyester-based resin composition according to the embodiment of the present invention may be produced by any appropriate method such as a method generally known as a method of producing a resin composition. A typical example of such production method is production by melt-kneading.

A melt-kneading method is, for example, a method including uniformly dryblending components to be blended with a Henschel mixer, a ribbon blender, a V-type blender, or a tumbler, and then melt-kneading the blend with a uniaxial or multiaxial kneading extruder, a roll, a Banbury mixer, or Labo Plastomill (Brabender GmbH & Co. KG). In addition, the components to be blended may be separately or sequentially fed by, for example, adjusting a feeding ratio.

The temperature of the melt-kneading may be appropriately selected in accordance with the kinds of the components to be blended, the ratios of the components to be blended, the kind of a device used in melt-kneading, and the like. The temperature of the melt-kneading is preferably set to a temperature equal to or higher than the melting point of a component having the highest melting point of the components to be blended, and is more preferably from (the melting point plus 5°C) to (the melting point plus 40°C) from the viewpoint that the effects of the present invention can be further expressed.

After the melt-kneading, for example, the molten resin may be discharged from a strand die in a strand shape, passed through a water tank for cooling, and then cut with a pelletizer in a pellet shape to provide pellets.

The total content ratio of the polyester-based resin (A), the polyolefin-based resin (B), the glycidyl group-containing resin (C), and the polycarbodiimide (D) in the polyester-based resin composition according to Embodiment (I) of the present invention is preferably 50 wt% or more, more preferably 70 wt% or more, still more preferably 80 wt% or more, still more preferably more than 90 wt%. The upper limit of the content ratio is preferably 100 wt%. When the total content ratio of the polyester-based resin (A), the polyolefin-based resin (B), the glycidyl group-containing resin (C), and the polycarbodiimide (D) in the polyester-based resin composition according to Embodiment (I) of the present invention falls within the above-mentioned ranges, the effects of the present invention can be further expressed. The total content ratio of the polyester-based resin (A), the polyolefin-based resin (B), the glycidyl group-containing resin (C), and the polycarbodiimide (D) in the polyester-based resin composition according to Embodiment (I) of the present invention may be 95 wt% or more or 98 wt% or more, for example, when the polyester-based resin composition does not include the impact modifier (E) to be described later.

The polyester-based resin composition according to Embodiment (I) of the present invention may include any appropriate component except the polyester-based resin (A), the polyolefin-based resin (B), the glycidyl group-containing resin (C), and the polycarbodiimide (D) to the extent that the effects of the present invention are not impaired. The content ratio of the other component in the polyester-based resin composition according to Embodiment (I) of the present invention is preferably 50 wt% or less, more preferably 30 wt% or less, still more preferably 20 wt% or less, still more preferably less than 10 wt%. The lower limit of the content ratio is preferably 0 wt%. The content ratio of the other component in the polyester-based resin composition according to Embodiment (I) of the present invention may be, for example, 5 wt% or less or 2 wt% or less, for example, when the polyester-based resin composition does not include the impact modifier (E) to be described later.

Examples of the other component that may be incorporated into the polyester-based resin composition according to Embodiment (I) of the present invention include an impact modifier, a pigment, a dye, a filler, a reinforcing material, a heat stabilizer, a light stabilizer, an antioxidant, a UV resistor, a plasticizer, a flame retardant, an antistatic agent, a release agent, a foaming agent, and a nucleating agent. The other components may be used alone or in combination thereof.

The total content ratio of the polyester-based resin (A), the polyolefin-based resin (B), the glycidyl group-containing resin (C), and the impact modifier (E) in the polyester-based resin composition according to Embodiment (II) of the present invention is preferably 50 wt% or more, more preferably 70 wt% or more, still more preferably 80 wt% or more, still more preferably 90 wt% or more, particularly preferably 95 wt% or more, most preferably 98 wt% or more. The upper limit of the content ratio is preferably 100 wt%. When the total content ratio of the polyester-based resin (A), the polyolefin-based resin (B), the glycidyl group-containing resin (C), and the impact modifier (E) in the polyester-based resin composition according to Embodiment (II) of the present invention falls within the above-mentioned ranges, the effects of the present invention can be further expressed.

The polyester-based resin composition according to Embodiment (II) of the present invention may include any appropriate component except the polyester-based resin (A), the polyolefin-based resin (B), the glycidyl group-containing resin (C), and the impact modifier (E) to the extent that the effects of the present invention are not impaired. The content ratio of the other component in the polyester-based resin composition according to Embodiment (II) of the present invention is preferably 50 wt% or less, more preferably 30 wt% or less, still more preferably 20 wt% or less, still more preferably 10 wt% or less, particularly preferably 5 wt% or less, most preferably 2 wt% or less. The lower limit of the content ratio is preferably 0 wt%.

Examples of the other component that may be incorporated into the polyester-based resin composition according to Embodiment (II) of the present invention include a polycarbodiimide, a pigment, a dye, a filler, a reinforcing material, a heat stabilizer, a light stabilizer, an antioxidant, a UV resistor, a plasticizer, a flame retardant, an antistatic agent, a release agent, a foaming agent, and a nucleating agent. The other components may be used alone or in combination thereof.

### <Polyester-based Resin (A)>

The content ratio of the polyester-based resin (A) in the sum of the polyester-based resin (A), the polyolefin-based resin (B), and the glycidyl group-containing resin (C) in the polyester-based resin composition according to the embodiment of the present invention is preferably from 50 wt% to 98 wt%, more preferably from 60 wt% to 97 wt%, still more preferably from 70 wt% to 96 wt%, still more preferably from 75 wt% to 95 wt%, particularly preferably from 80 wt% to 94 wt%, most preferably from 82 wt% to 93 wt%. When the content ratio of the polyester-based resin (A) in the sum of the polyester-based resin (A), the polyolefin-based resin (B), and the glycidyl group-containing resin (C) falls within the above-mentioned ranges, the effects of the present invention can be further expressed. When the content ratio of the polyester-based resin (A) is outside the above-mentioned ranges and is too low or too high, the effects of the present invention may not be expressed. For example, the melting properties of the polyester-based resin composition to be obtained are reduced.

In the polyester-based resin composition according to Embodiment (I) of the present invention out of the polyester-based resin compositions according to the embodiments of the present invention, the content ratio of the polyester-based resin (A) in the sum of the polyester-based resin (A), the polyolefin-based resin (B), the glycidyl group-containing resin (C), and the polycarbodiimide (D) is preferably from 50 wt% to 95 wt%, more preferably from 60 wt% to 93 wt%, still more preferably from 70 wt% to 92 wt%, particularly preferably from 75 wt% to 91 wt%, most preferably from 80 wt% to 90 wt%. When the content ratio of the polyester-based resin (A) in the sum of the polyester-based resin (A), the polyolefin-based resin (B), the glycidyl group-containing resin (C), and the polycarbodiimide (D) falls within the above-mentioned ranges, the effects of the present invention can be further expressed.

In the polyester-based resin composition according to Embodiment (I) of the present invention out of the polyester-based resin compositions according to the embodiments of the present invention, the content ratio of the polyester-based resin (A) in the sum of the polyester-based resin (A), the polyolefin-based resin (B), and the glycidyl group-containing resin (C) is preferably from 50 wt% to 95 wt%, more preferably from 60 wt% to 93 wt%, still more preferably from 70 wt% to 92 wt%, still more preferably from 75 wt% to 91 wt%, particularly preferably from 80 wt% to 90 wt% from the viewpoint that the effects of the present invention can be still further expressed.

In the polyester-based resin composition according to Embodiment (II) of the present invention out of the polyester-based resin compositions according to the embodiments of the present invention, the content ratio of the polyester-based resin (A) in the sum of the polyester-based resin (A), the polyolefin-based resin (B), and the glycidyl group-containing resin (C) is preferably from 60 wt% to 98 wt%, more preferably from 70 wt% to 98 wt%, still more preferably from 80 wt% to 98 wt%, still more preferably from 85 wt% to 98 wt%, particularly preferably from 90 wt% to 98 wt% from the viewpoint that the effects of the present invention can be still further expressed.

Any appropriate polyester-based resin may be adopted as the polyester-based resin (A) to the extent that the effects of the present invention are not impaired. The polyester-based resins (A) may be used alone or in combination thereof. The polyester-based resin (A) is preferably a polymer or copolymer obtained by a condensation reaction of an aromatic dicarboxylic acid (or an ester-forming derivative thereof) and a diol (or an ester-forming derivative thereof) and/or a hydroxycarboxylic acid serving as main components from the viewpoint that the effects of the present invention can be further expressed.

Examples of the aromatic dicarboxylic acid include terephthalic acid, isophthalic acid, orthophthalic acid, 2,6-naphthalenedicarboxylic acid, 1,5-naphthalenedicarboxylic acid, bis(p-carboxyphenyl)methane, anthracenedicarboxylic acid, 4,4'-diphenyldicarboxylic acid, 1,2-bis(phenoxy)ethane-4,4'-dicarboxylic acid, and 5-sodiosulfoisophthalic acid. The aromatic dicarboxylic acids may be used alone or in combination thereof.

An aliphatic dicarboxylic acid or an alicyclic dicarboxylic acid may be used in combination with the aromatic dicarboxylic acid. Examples of the aliphatic dicarboxylic acid include adipic acid, sebacic acid, azelaic acid, and dodecanedioic acid. Examples of the alicyclic dicarboxylic acid include 1,3-cyclohexanedicarboxylic acid and 1,4-cyclohexanedicarboxylic acid. The aliphatic dicarboxylic acids may be used alone or in combination thereof. The alicyclic dicarboxylic acids may be used alone or in combination thereof.

Examples of the diol include aliphatic diols each having 2 to 20 carbon atoms, and specific examples thereof include ethylene glycol, propylene glycol, 1,4-butanediol, neopentyl glycol, 1,5-pentanediol, 1,6-hexanediol, decamethylene glycol, cyclohexanedimethanol, and cyclohexanediol. The diols may be used alone or in combination thereof.

Specific examples of the polyester-based resin (A) include: polyalkylene terephthalates, such as polyethylene terephthalate, polypropylene terephthalate, polybutylene terephthalate, polycyclohexane dimethylene terephthalate, and polyhexylene terephthalate; and polyethylene-2,6-naphthalene dicarboxylate, polybutylene-2,6-naphthalene dicarboxylate, polyethylene-1,2-bis(phenoxy)ethane-4,4'-dicarboxylate, polyethylene isophthalate/terephthalate, polybutylene isophthalate/terephthalate, polybutylene terephthalate/decane dicarboxylate, poly(ethylene terephthalate/cyclohexane dimethylene terephthalate), and polyethylene-4,4'-dicarboxylate/terephthalate from the viewpoint that the effects of the present invention can be further expressed. The polyester-based resin (A) is preferably polyethylene terephthalate, polybutylene terephthalate, or polyethylene-2,6-naphthalene dicarboxylate, more preferably polyethylene terephthalate (PET) from the viewpoint that the effects of the present invention can be still further expressed.

A recycled polyester-based resin may be used as the polyester-based resin (A), and the polyester-based resin (A) is typically a recycled PET.

The polyester-based resin (A) may be a recycled PET alone or a blend with virgin PET.

A generally known recycled PET may be adopted as the recycled PET. Such recycled PET is obtained by, for example, collecting a used PET film or a used PET container such as a discarded PET bottle and performing treatment such as purification.

In the present invention, even when there is variation in the MFR of the polyester-based resin (A), the combination of the polyester-based resin (A) with the polyolefin-based resin (B) and the glycidyl group-containing resin (C), and at least one kind selected from the group consisting of: the polycarbodiimide (D); and the impact modifier (E) can provide the polyester-based resin composition capable of expressing excellent melting properties and excellent mechanical properties. In particular, when a recycled PET is adopted, the MFR varies depending on the lot owing to various histories of collected PET to become a main raw material. In the present invention, a polyester-based resin composition having stable quality can be produced without fine adjustment of the MFR of the polyester-based resin (A) on each occasion.

As described above, in the present invention, the MFR of the polyester-based resin (A) does not have to be finely adjusted on each occasion, and a polyester-based resin in which the MFR at a temperature of 285°C and a load of 2.16 kg preferably falls within the wide range of from 100 g/10 min to 300 g/10 min has only to be adopted.

### <Polyolefin-based Resin (B)>

The content ratio of the polyolefin-based resin (B) in the sum of the polyester-based resin (A), the polyolefin-based resin (B), and the glycidyl group-containing resin (C) in the polyester-based resin composition according to the embodiment of the present invention is preferably from 1 wt% to 45 wt%, more preferably from 1 wt% to 35 wt%, still more preferably from 1 wt% to 25 wt%, particularly preferably from 1 wt% to 20 wt%, most preferably from 1 wt% to 15 wt%. When the content ratio of the polyolefin-based resin (B) in the sum of the polyester-based resin (A), the polyolefin-based resin (B), and the glycidyl group-containing resin (C) falls within the above-mentioned ranges, the effects of the present invention can be further expressed.

In the polyester-based resin composition according to Embodiment (I) of the present invention out of the polyester-based resin compositions according to the embodiments of the present invention, the content ratio of the polyolefin-based resin (B) in the sum of the polyester-based resin (A), the polyolefin-based resin (B), and the glycidyl group-containing resin (C) is preferably from 5 wt% to 45 wt%, more preferably from 5 wt% to 35 wt%, still more preferably from 6 wt% to 25 wt%, particularly preferably from 7 wt% to 20 wt%, most preferably from 8 wt% to 15 wt% from the viewpoint that the effects of the present invention can be still further expressed.

In the polyester-based resin composition according to Embodiment (II) of the present invention out of the polyester-based resin compositions according to the embodiments of the present invention, the content ratio of the polyolefin-based resin (B) in the sum of the polyester-based resin (A), the polyolefin-based resin (B), and the glycidyl group-containing resin (C) is preferably from 1 wt% to 40 wt%, more preferably from 1 wt% to 30 wt%, still more preferably from 1 wt% to 20 wt%, particularly preferably from 1 wt% to 10 wt%, most preferably from 1 wt% to 8 wt% from the viewpoint that the effects of the present invention can be still further expressed.

Any appropriate polyolefin-based resin (B) may be adopted as the polyolefin-based resin (B) to the extent that the effects of the present invention are not impaired. The polyolefin-based resins (B) may be used alone or in combination thereof. A typical example of the polyolefin-based resin (B) is a copolymer of an ethylene and/or propylene monomer, and any appropriate monomer selected from another α-olefin, vinyl acetate, methyl (meth)acrylate, vinyl alcohol, and (meth)acrylic acid.

The polyolefin-based resin (B) is preferably an ethylene-α-olefin copolymer, more preferably a linear low-density polyethylene (LLDPE) from the viewpoint that the effects of the present invention can be further expressed.

Any appropriate LLDPE may be adopted as the LLDPE to the extent that the effects of the present invention are not impaired. Examples of the LLDPE include a C4-based LLDPE (ethylene-1-butene copolymer), a C6-based LLDPE (ethylene-1-hexene copolymer), and a C8-based LLDPE (ethylene-1-octene copolymer) from the viewpoint that the effects of the present invention can be further expressed.

The LLDPE may be a LLDPE produced by using a Ziegler-Natta catalyst or a LLDPE produced by using a metallocene catalyst.

The MFR of the polyolefin-based resin (B) at a temperature of 190°C and a load of 2.16 kg is preferably from 0.5 g/10 min to 50 g/10 min, more preferably from 0.6 g/10 min to 45 g/10 min, still more preferably from 0.7 g/10 min to 40 g/10 min, particularly preferably from 0.8 g/10 min to 35 g/10 min. When the MFR falls within the above-mentioned ranges, the effects of the present invention can be further expressed. When the MFR is outside the above-mentioned ranges and is too low, the dispersibility in the polyester-based resin (A) may be reduced. When the MFR is outside the above-mentioned ranges and is too high, the domain size in the polyester-based resin (A) may be too small, and for example, mechanical properties may be reduced.

In the present invention, the polyester-based resin composition may be applied to various purposes by appropriately adjusting the MFR of the polyolefin-based resin (B). For example, when the polyolefin-based resin (B) having a higher MFR is added, the viscosity of the polyester-based resin composition is reduced more in a high shear speed range during melt-kneading, but the MFR of the polyester-based resin composition tends to become smaller. This is because the MFR is evaluated by a discharge amount under a constant load, and hence it can be said that measurement of the viscosity of a resin having a relatively high viscosity is equal to measurement of the viscosity in a low shear speed range. Accordingly, the polyolefin-based resin (B) having a high MFR can be satisfactorily used in a molding method requiring maintenance of shape after discharge, for example, profile extrusion molding, sheet extrusion molding, a melt extrusion-type 3D printer, or the like. Consequently, the polyolefin-based resin (B) having a high MFR may also be adopted in a molding method requiring flowability even after discharge, for example, injection molding. Thus, by appropriately adjusting the MFR of the polyolefin-based resin (B), the polyester-based resin composition can be applied to various molding methods and the mechanical properties can be controlled.

Meanwhile, in the polyester-based resin composition according to Embodiment (II) of the present invention, the polyolefin-based resin (B) having a low MFR may be adopted. The MFR of the polyolefin-based resin (B) having a low MFR is preferably from 0.8 g/10 min to 30 g/10 min, more preferably from 0.8 g/10 min to 25 g/10 min, still more preferably from 0.8 g/10 min to 20 g/10 min, still more preferably from 0.8 g/10 min to 15 g/10 min, still more preferably from 0.8 g/10 min to 10 g/10 min, particularly preferably from 0.8 g/10 min to 5 g/10 min, most preferably from 0.8 g/10 min to 3 g/10 min.

### <Glycidyl Group-containing Resin (C)>

The polyester-based resin (A) typically includes a carboxylic acid group or a hydroxy group at its terminal. Accordingly, in order to increase the apparent molecular weight of the polyester-based resin (A) and improve the melting properties and the mechanical properties, a resin having high reactivity with a carboxylic acid group or a hydroxy group and a resin compatible therewith were investigated, and as a result, attention was first paid to a glycidyl group-containing resin having a glycidyl group. However, for any glycidyl group-containing resin, no improving effects on melting properties and mechanical properties were observed, gelation occurred, and hence further investigations were made. As a result, the glycidyl group-containing resin (C) in which the content ratio of a glycidyl methacrylate unit in a molecule thereof was adjusted within a specific range and the MFR was further adjusted within a specific range was adopted, and combined with the polyolefin-based resin (B), and at least one kind selected from the group consisting of: the polycarbodiimide (D); and the impact modifier (E). Thus, the effects of the present invention were able to be expressed. The glycidyl group-containing resins (C) may be used alone or in combination thereof.

The content ratio of the glycidyl group-containing resin (C) in the sum of the polyester-based resin (A), the polyolefin-based resin (B), and the glycidyl group-containing resin (C) in the polyester-based resin composition according to the embodiment of the present invention is preferably from 0.1 wt% to 20 wt%, more preferably from 0.5 wt% to 15 wt%, still more preferably from 0.8 wt% to 10 wt%, particularly preferably from 1 wt% to 7 wt%, most preferably from 1 wt% to 5 wt%. When the content ratio of the glycidyl group-containing resin (C) in the sum of the polyester-based resin (A), the polyolefin-based resin (B), and the glycidyl group-containing resin (C) falls within the above-mentioned ranges, the effects of the present invention can be further expressed.

In the polyester-based resin composition according to Embodiment (I) of the present invention out of the polyester-based resin compositions according to the embodiments of the present invention, the content ratio of the glycidyl group-containing resin (C) in the sum of the polyester-based resin (A), the polyolefin-based resin (B), and the glycidyl group-containing resin (C) is preferably from 1 wt% to 20 wt%, more preferably from 1 wt% to 15 wt%, still more preferably from 1 wt% to 10 wt%, particularly preferably from 1 wt% to 7 wt%, most preferably from 1 wt% to 5 wt% from the viewpoint that the effects of the present invention can be still further expressed.

In the polyester-based resin composition according to Embodiment (II) of the present invention out of the polyester-based resin compositions according to the embodiments of the present invention, the content ratio of the glycidyl group-containing resin (C) in the sum of the polyester-based resin (A), the polyolefin-based resin (B), and the glycidyl group-containing resin (C) is preferably from 0.1 wt% to 15 wt%, more preferably from 0.2 wt% to 10 wt%, still more preferably from 0.4 wt% to 7 wt%, particularly preferably from 0.6 wt% to 5 wt%, most preferably from 0.8 wt% to 3 wt% from the viewpoint that the effects of the present invention can be still further expressed.

The glycidyl group-containing resin (C) contains 2 wt% to 30 wt% of a glycidyl methacrylate unit in a molecule thereof. The content ratio of the glycidyl methacrylate unit in the molecule of the glycidyl group-containing resin (C) is preferably from 3 wt% to 27 wt%, more preferably from 5 wt% to 25 wt%, still more preferably from 7 wt% to 23 wt%, particularly preferably from 10 wt% to 20 wt%. When the content ratio of the glycidyl methacrylate unit in the molecule of the glycidyl group-containing resin (C) falls within the above-mentioned ranges, the effects of the present invention can be further expressed. When the content ratio of the glycidyl methacrylate unit in the molecule of the glycidyl group-containing resin (C) is outside the above-mentioned ranges and is too high, gelation occurs, and the physical property value of the polyester-based resin composition to be obtained may vary. Variation in the physical property value is caused. When the content ratio of the glycidyl methacrylate unit in the molecule of the glycidyl group-containing resin (C) is outside the above-mentioned ranges and is too low, excellent melting properties may not be achieved.

The glycidyl group-containing resin (C) has a MFR at a temperature of 190°C and a load of 2.16 kg of from 1 g/10 min to 500 g/10 min. The MFR of the glycidyl group-containing resin (C) at a temperature of 190°C and a load of 2.16 kg is preferably from 5 g/10 min to 480 g/10 min, more preferably from 10 g/10 min to 450 g/10 min, still more preferably from 30 g/10 min to 450 g/10 min, particularly preferably from 100 g/10 min to 450 g/10 min, most preferably from 200 g/10 min to 450 g/10 min. When the MFR falls within the above-mentioned ranges, the effects of the present invention can be further expressed. When the MFR is outside the above-mentioned ranges and is too high, the glycidyl group-containing resin (C) alone may become a domain in the polyester-based resin (A). When the MFR is outside the above-mentioned ranges and is too low, the dispersibility in the polyester-based resin (A) may be reduced.

When the glycidyl group-containing resin (C) contains 2 wt% to 30 wt% of a glycidyl methacrylate unit in a molecule thereof and has a MFR at a temperature of 190°C and a load of 2.16 kg of from 1 g/10 min to 500 g/10 min, any appropriate glycidyl group-containing resin may be adopted to the extent that the effects of the present invention are not impaired. Such glycidyl group-containing resin (C) preferably contains an ethylene unit from the viewpoint that the effects of the present invention can be further expressed, and more preferred examples thereof include a copolymer of a monomer component essentially containing ethylene and glycidyl methacrylate, and a copolymer having, in a main chain thereof, a copolymeric structure of a monomer component essentially containing ethylene and glycidyl methacrylate.

Examples of the copolymer of a monomer component essentially containing ethylene and glycidyl methacrylate include an ethylene-glycidyl methacrylate copolymer, an ethylene-glycidyl methacrylate-methyl acrylate copolymer, an ethylene-glycidyl methacrylate-vinyl acetate copolymer, and an ethylene-glycidyl methacrylate-1-hexene copolymer. An example of the copolymer having, in a main chain thereof, a copolymeric structure of a monomer component essentially containing ethylene and glycidyl methacrylate is a copolymer having an ethylene-glycidyl methacrylate copolymer structure as a main chain thereof and a butyl acrylate-methyl methacrylate copolymer as a side chain thereof.

### <Polycarbodiimide (D)>

The polyester-based resin composition according to the embodiment of the present invention may include the polycarbodiimide (D). The polyester-based resin (A) typically includes a carboxylic acid group or a hydroxy group at its terminal. Accordingly, in order to increase the apparent molecular weight of the polyester-based resin (A) and improve the melting properties and the mechanical properties, a resin having high reactivity with a carboxylic acid group or a hydroxy group and a resin compatible therewith are investigated. When the glycidyl group-containing resin (C) in which the content ratio of a glycidyl methacrylate unit in a molecule thereof is adjusted within a specific range and the MFR is further adjusted within a specific range is adopted as described above, and combined with the polyolefin-based resin (B) and the polycarbodiimide (D), the effects of the present invention can be expressed. Here, in Embodiment (I) of the present invention, when the above-mentioned specific glycidyl group-containing resin (C) is not adopted as a glycidyl group-containing resin with which the polyolefin-based resin (B) and the polycarbodiimide (D) are combined, the effects of the present invention may not be expressed. In Embodiment (I) of the present invention, particularly when the polycarbodiimide (D) is not combined with the above-mentioned specific glycidyl group-containing resin (C), gelation is liable to occur, and significantly excellent melting properties and significantly excellent mechanical properties cannot be expressed. In Embodiment (I) of the present invention, when the polycarbodiimide (D) is combined with the above-mentioned specific glycidyl group-containing resin (C), the polycarbodiimide (D) reacts with a terminal carboxylic acid of the polyester-based resin (A), and as a result, a bulky structure in which the polyester-based resin (A) is grafted to the polycarbodiimide (D) may be obtained. Thus, excellent melting properties can be expressed. Further, it is conceivable that even when a small amount of the specific glycidyl group-containing resin (C) and a small amount of the polycarbodiimide (D) are added, significantly excellent melting properties and significantly excellent mechanical properties can be expressed while gelation is suppressed, by virtue of a synergistic effect with the specific glycidyl group-containing resin (C).

In the polyester-based resin composition according to Embodiment (I) of the present invention, when the total amount of the polyester-based resin (A), the polyolefin-based resin (B), and the glycidyl group-containing resin (C) is 100 parts by weight, the amount of the polycarbodiimide (D) is preferably from 0.1 part by weight to 3.0 parts by weight, more preferably from 0.15 part by weight to 2.5 parts by weight, still more preferably from 0.2 part by weight to 2 parts by weight, particularly preferably from 0.25 part by weight to 1.5 parts by weight. When the amount of the polycarbodiimide (D) with respect to 100 parts by weight of the total amount of the polyester-based resin (A), the polyolefin-based resin (B), and the glycidyl group-containing resin (C) falls within the above-mentioned ranges, the effects of the present invention can be further expressed.

The polyester-based resin composition according to Embodiment (II) of the present invention may include the polycarbodiimide (D). In the polyester-based resin composition according to Embodiment (II) of the present invention, when the total amount of the polyester-based resin (A), the polyolefin-based resin (B), and the glycidyl group-containing resin (C) is 100 parts by weight, the amount of the polycarbodiimide (D) is preferably 3.0 parts by weight or less, more preferably 2.5 parts by weight or less, still more preferably 2 parts by weight or less, particularly preferably 1.5 parts by weight or less. The lower limit of the amount of the polycarbodiimide (D) is preferably 0 parts by weight.

The molecular structure of the polycarbodiimide (D) may be any of aromatic, alicyclic, and aliphatic structures, or a cyclic structure.

The weight molecular weight of the polycarbodiimide (D) is preferably from 800 to 6000, more preferably from 800 to 5800, still more preferably from 1000 to 5500. When the weight molecular weight of the polycarbodiimide (D) falls within the above-mentioned ranges, the effects of the present invention can be further expressed. When the weight molecular weight of the polycarbodiimide (D) is outside the above-mentioned ranges and is a low molecular weight, a bulky structure may not be formed even by grafting the polyester-based resin (A) to the polycarbodiimide (D). When the weight molecular weight of the polycarbodiimide (D) is outside the above-mentioned ranges and is a high molecular weight, the reactivity of a carbodiimide may be reduced.

Examples of the polycarbodiimide (D) include poly(4,4'-dicyclohexylmethane carbodiimide), poly(4,4'-diphenylmethane carbodiimide), poly(3,5'-dimethyl-4,4'-diphenylmethane carbodiimide), poly(p-phenylene carbodiimide), poly(m-phenylene carbodiimide), poly(naphthylene carbodiimide), poly(1,3-diisopropyl phenylene carbodiimide), poly(1-methyl-3,5-diisopropyl phenylene carbodiimide), poly(1,3,5-triethyl phenylene carbodiimide), and poly(triisopropyl phenylene carbodiimide). The polycarbodiimides (D) may be used alone or in combination thereof.

### <Impact Modifier (E)>

The polyester-based resin composition according to the embodiment of the present invention may include the impact modifier (E). Any appropriate impact modifier may be adopted as the impact modifier (E) to the extent that the effects of the present invention are not impaired as long as the impact resistance of a resin composition including the impact modifier and the like can be modified. The impact modifiers (E) may be used alone or in combination thereof. Such impact modifier typically contains a rubber component. Examples of the rubber component include: conjugated diene-based polymers, such as polybutadiene, polyisoprene, a butadiene-polyisoprene copolymer, an acrylonitrile-isoprene copolymer, a (meth)acrylic acid ester-butadiene copolymer, a (meth)acrylic acid ester-butadiene-styrene copolymer, and a (meth)acrylic acid ester-isoprene copolymer; hydrogenated products of the conjugated diene-based polymers; olefin-based rubbers such as an ethylene-propylene copolymer; (meth)acrylic rubbers such as a poly(meth)acrylic acid ester; silicone-(meth)acrylic polymer composite rubbers; and polyorganosiloxanes. Of those, a conjugated diene-based polymer, a hydrogenated product of a conjugated diene-based polymer, a (meth)acrylic rubber, or a silicone-(meth)acrylic polymer composite rubber is preferably adopted. Examples of the (meth)acrylic acid ester to be used for obtaining the (meth)acrylic rubber include methyl (meth)acrylate, ethyl (meth)acrylate, propyl (meth)acrylate, butyl (meth)acrylate, 2-ethylhexyl (meth)acrylate, and octyl (meth)acrylate.

In order to express rubber elasticity, the impact modifier (E) may have a crosslinked molecular chain structure. The impact modifier (E) has a rubber layer and an adjacent layer that is adjacent to the rubber layer, and a molecular chain of the rubber layer may be grafted to a molecular chain of the adjacent layer via a chemical bond.

The impact modifier (E) is preferably a core/shell-type structure having a core portion and a shell portion, and the core portion may contain a rubber component. Such core/shell-type structure may be, for example, a structure in which a polymerizable monomer for forming a shell portion is graft-polymerized in the presence of a polymer for forming a core portion.

Examples of the polymer for forming the core portion include the above-mentioned rubber components.

Examples of the polymerizable monomer that may be used for forming the shell portion include: (meth)acrylic acid esters, such as methyl (meth)acrylate, ethyl (meth)acrylate, propyl (meth)acrylate, butyl (meth)acrylate, amyl (meth)acrylate, hexyl (meth)acrylate, 2-ethylhexyl (meth)acrylate, cyclohexyl (meth)acrylate, octyl (meth)acrylate, decyl (meth)acrylate, dodecyl (meth)acrylate, octadecyl (meth)acrylate, phenyl (meth)acrylate, benzyl (meth)acrylate, naphthyl (meth)acrylate, and isobornyl (meth)acrylate; (meth)acrylic acids, such as acrylic acid and methacrylic acid; aromatic vinyl compounds, such as styrene and α-methylstyrene; and acrylonitrile. The shell layer may be a modified product (e.g., epoxy-modified) of a polymer obtained from those polymerizable monomers.

Preferred examples of the shell portion include a polymer obtained from at least one kind selected from a (meth)acrylic acid ester and styrene, and a modified product (e.g., epoxy-modified) of such polymer.

Any appropriate content may be adopted as the content of the core portion in the core/shell-type structure to the extent that the effects of the present invention are not impaired. Such content may be, for example, within the range of from 25 wt% to 90 wt%, or within the range of from 40 wt% to 80 wt%. When the content of the core portion is too small, flexibility is insufficient, and sufficient impact resistance may not be expressed. When the content of the core portion is too large, the content of the shell portion is relatively too small, the compatibility with the polyester-based resin (A) is reduced, and sufficient impact resistance may not be expressed owing to a reduction in interfacial bonding strength and a reduction in homogeneous dispersibility.

A commercially available core/shell-type structure may also be adopted as a core/shell-type structure in which the above-mentioned rubber component is adopted as the polymer for forming the core portion, and a polymer obtained from at least one kind selected from a (meth)acrylic acid ester and styrene or a modified product (e.g., epoxy-modified) of the polymer is adopted as the shell portion. Examples of such commercially available core/shell-type structure include "METABLEN (trademark) C" series (manufactured by Mitsubishi Chemical Corporation), "METABLEN (trademark) E" series (manufactured by Mitsubishi Chemical Corporation), "METABLEN (trademark) W" series (manufactured by Mitsubishi Chemical Corporation), "METABLEN (trademark) S" series (manufactured by Mitsubishi Chemical Corporation), "KaneAce (trademark) B" series (manufactured by Kaneka Corporation), "KaneAce (trademark) FM" series (manufactured by Kaneka Corporation), and "KaneAce (trademark) M" series (manufactured by Kaneka Corporation). Of those, "METABLEN (trademark) S" series (manufactured by Mitsubishi Chemical Corporation) or "KaneAce (trademark) FM" series (manufactured by Kaneka Corporation) is preferably adopted.

The average particle diameter of the core/shell-type structure is preferably from 10 nm to 1000 nm, more preferably from 30 nm to 750 nm, particularly preferably from 50 nm to 500 nm. When the average particle diameter of the core/shell-type structure falls within the above-mentioned ranges, impact resistance and moldability can be further improved.

The content ratio of the impact modifier (E) in the polyester-based resin composition including the impact modifier (E) according to Embodiment (II) is preferably from 0.5 wt% to 30 wt%, more preferably from 0.5 wt% to 25 wt%, still more preferably from 1 wt% to 20 wt%, still more preferably from 3 wt% to 15 wt%, particularly preferably from 4 wt% to 8 wt%. When the content ratio is outside the above-mentioned ranges and is too small, a sufficient impact-modifying effect may not be obtained. When the content ratio is outside the above-mentioned ranges and is too large, an improvement in impact modification that corresponds to or is more than the addition amount is not achieved, and other characteristics may be reduced.

The content ratio of the impact modifier (E) in the polyester-based resin composition that does not include as an essential component the impact modifier (E) according to Embodiment (I) of the present invention is preferably 30 wt% or less, more preferably 25 wt% or less, still more preferably 20 wt% or less, still more preferably 15 wt% or less, particularly preferably 8 wt% or less. The lower limit of the content ratio of the impact modifier (E) is preferably 0 wt%, and may be 0.5 wt% or more, 1 wt% or more, 3 wt% or more, or 4 wt% or more.

In injection molding, the flowability of a molten resin during molding is important. The impact resistance of a molded article may also be improved to a certain degree by increasing the addition amounts of the glycidyl group-containing resin (C) and the polycarbodiimide (D). However, the excessive addition thereof may cause an excessive increase in melt viscosity or gelation. Meanwhile, when the melt viscosity is too low, defects such as easy generation of burr may be caused. Accordingly, in particular, in applications that require impact resistance, moderate flowability is necessary while the impact resistance of a molded article is improved. In the present invention, both the necessary characteristics can be achieved by adding the impact modifier (E), and adding the glycidyl group-containing resin (C) and the polycarbodiimide (D) in a balanced manner.

### <<Polyester-based Resin Molded Article>>

A polyester-based resin molded article according to an embodiment of the present invention is obtained by molding the polyester-based resin composition according to the embodiment of the present invention by injection molding.

Any appropriate method that is generally known as an injection molding method for a polyester-based resin composition may be adopted as an injection molding method to the extent that the effects of the present invention are not impaired.

### EXAMPLES

The present invention is specifically described below by way of Examples. However, the present invention is by no means limited to these Examples. Test and evaluation methods in Examples and the like are as described below. The term "part(s)" in the following description means "part(s) by weight" unless otherwise specified, and the term "%" in the following description means "wt%" unless otherwise specified.

### <Melt Flow Rate (MFR) Measurement>

A MFR was measured at a load of 2.16 kg and a temperature of 190°C and 285°C with a MFR measurement apparatus (apparatus name: MELT INDEXER F-F01, manufactured by Toyo Seiki Seisaku-sho, Ltd.) in accordance with Method B of JIS K7210.

A lower MFR value serves as an indication of a higher modification effect on a resin.

### <Tensile Elongation (Measurement A)>

Pellets of a produced resin composition were dehumidified and dried, then press-molded to a thickness of 0.2 mm at 280°C, and cooled to 40°C over about 5 minutes by water-cooling a press plate with pressure applied. Thus, a sheet for evaluation was obtained.

After that, the sheet was punched in a shape of dumbbell No. 5, and a tensile test was performed with Autograph (apparatus name: AG-X 20kN, manufactured by Shimadzu Corporation). The tensile test was performed at 23°C, a tensile speed of 50 mm/min, and a distance between chucks of 70 mm.

A yield point strength is generally exhibited at a tensile elongation value of about 4%, and hence elongation at a value that is more than this tensile elongation value may serve as an indication of an acceptable product.

### <Tensile Elongation (Measurement B)>

Pellets of the produced resin composition were dried at 100°C for 5 hours with a dehumidification dryer, and then injection-molded (injection temperature: 280°C, die temperature: 40°C) to produce an ISO527-2-5A test specimen (width at narrowest part: 4 mm, thickness: 2 mm). The obtained test specimen was subjected to a tensile test with **Autograph** (apparatus name: AG-X 20kN, manufactured by Shimadzu Corporation). The tensile test was performed at 23°C, a tensile speed of 50 mm/min, and a distance between chucks of 40 mm.

A yield point strength is generally exhibited at a tensile elongation value of about 4%, and hence elongation at a value that is more than this tensile elongation value may serve as an indication of an acceptable product.

### <Izod Impact Test>

An Izod impact value was measured at 23°C with an Izod impact tester (apparatus name: No. 258 impact tester (in accordance with JIS K7110), manufactured by Yasuda Seiki Seisakusho, Ltd.). Pellets of the produced resin composition were dried at 100°C for 5 hours with a dehumidification dryer, and then injection-molded (injection temperature: 280°C, die temperature: 40°C) in a size of 80 mm×10 mm×4 mm, and an A-notch was processed by post-processing. Thus, a test specimen was produced.

In an application requiring impact resistance, a product exhibiting an impact strength of 10 kJ/m² or more may serve as an indication of an acceptable product.

### <Evaluation of Molded Article>

Injection molding was performed at an injection temperature of 285°C and a die temperature of 40°C with a 180 ton injection molding machine to provide a cylindrical molded article having an inner diameter of 72 mm, an outer diameter of 74 mm, and a length of 50 mm. This molded article was compressed in a circumferential direction with a compression tester, and the appearance of the molded article compressed by 50 mm was evaluated according to the following criteria.
Satisfactory (marked with the symbol "∘"): The molded article was deformed, but was not broken.
Unsatisfactory (marked with the symbol "×"): The elongation was small, and the molded article was broken before the stress reached the yield point.

### <Materials Used>

Materials used in Examples and Comparative Examples are as described below.

### [Polyester-based Resin]

▪Polyester-based resin (A1): recycled PET, MFR (load: 2.16 kg, temperature: 285°C)=212 g/10 min
▪Polyester-based resin (A2): recycled PET, MFR (load: 2.16 kg, temperature: 285°C)=180 g/10 min
▪Polyester-based resin (A3): recycled PET, MFR (load: 2.16 kg, temperature: 285°C)=121 g/10 min

### [Polyolefin-based Resin]

▪Polyolefin-based resin (B1): C8-based LLDPE, product name: "Queo8230", manufactured by Borealis AG, MFR (load: 2.16 kg, temperature: 190°C)=30 g/10 min
▪Polyolefin-based resin (B2): C8-based LLDPE, product name: "Queo8201", manufactured by Borealis AG, MFR (load: 2.16 kg, temperature: 190°C)=1.1 g/10 min
▪Polyolefin-based resin (B3): C4-based LLDPE, product name: "NOVATEC LL UJ580", manufactured by Japan Polyethylene Corporation, MFR (load: 2.16 kg, temperature: 190°C)=20 g/10 min
▪Polyolefin-based resin (B4): C4-based LLDPE, product name: "NOVATEC LL UJ960", manufactured by Japan Polyethylene Corporation, MFR (load: 2.16 kg, temperature: 190°C)=5 g/10 min
▪Polyolefin-based resin (B5): C4-based LLDPE, product name: "NOVATEC LL UF230", manufactured by Japan Polyethylene Corporation, MFR (load: 2.16 kg, temperature: 190°C)=1 g/10 min

### [Glycidyl Group-containing Resin]

▪Glycidyl group-containing resin (C1): ethylene (E)-glycidyl methacrylate (GMA) copolymer, E/GMA=81/19 (weight ratio), product name: "BONDFAST CG5001", manufactured by Sumitomo Chemical Company, Limited, MFR (load: 2.16 kg, temperature: 190°C)=380 g/10 min
▪Glycidyl group-containing resin (C2): ethylene (E)-glycidyl methacrylate (GMA) copolymer, E/GMA=81/19 (weight ratio), product name: "BONDFAST BF-30C", manufactured by Sumitomo Chemical Company, Limited, MFR (load: 2.16 kg, temperature: 190°C)=30 g/10 min
▪Glycidyl group-containing resin (C3): ethylene (E)-glycidyl methacrylate (GMA) copolymer, E/GMA=88/12 (weight ratio), product name: "BONDFAST BF-E", manufactured by Sumitomo Chemical Company, Limited, MFR (load: 2.16 kg, temperature: 190°C)=3 g/10 min
▪Glycidyl group-containing resin (C4): ethylene (E)-glycidyl methacrylate (GMA) copolymer, E/GMA=94/6 (weight ratio), product name: "BONDFAST BF-2C", manufactured by Sumitomo Chemical Company, Limited, MFR (load: 2.16 kg, temperature: 190°C)=3 g/10 min
▪Glycidyl group-containing resin (C5): ethylene (E)-glycidyl methacrylate (GMA)-methyl acrylate (MA) copolymer, E/GMA/MA=67/6/27 (weight ratio), product name: "BONDFAST BF-7M", manufactured by Sumitomo Chemical Company, Limited, MFR (load: 2.16 kg, temperature: 190°C)=7 g/10 min
▪Glycidyl group-containing resin (C6): ethylene (E)-glycidyl methacrylate (GMA)-vinyl acetate (VA) copolymer, E/GMA/VA=83/12/5 (weight ratio), product name: "BONDFAST BF-7B", manufactured by Sumitomo Chemical Company, Limited, MFR (load: 2.16 kg, temperature: 190°C)=7 g/10 min
▪Glycidyl group-containing resin (C7): ethylene (E)-glycidyl methacrylate (GMA)-1-hexene (H) copolymer, E/GMA/H=95/2/3 (weight ratio), product name: "ET100", manufactured by Showa Denko Kenzai K.K., MFR (load: 2.16 kg, temperature: 190°C)=1 g/10 min

### [Polycarbodiimide]

▪Polycarbodiimide (D1): product name: "Stabaxol P100", manufactured by Rhein Chemie Corporation, aromatic type, Mw=about 5000
▪Polycarbodiimide (D2): product name: "CARBODILITE LA-1", manufactured by Nisshinbo Chemical Inc., Mw=about 2000
▪Polycarbodiimide (D3): product name: "CARBODILITE HMV-15CA", manufactured by Nisshinbo Chemical Inc., Mw=about 2000

### [Impact Modifier]

▪Impact modifier (E1): core/shell structure including a butyl acrylate polymer serving as a core layer and a methacrylate-styrene copolymer serving as a shell layer (product name: KaneAce (trademark) FM-40, manufactured by Kaneka Corporation)
▪Impact modifier (E2): core/shell structure including a silicone-acrylic copolymer serving as a core layer and a methyl methacrylate polymer serving as a shell layer (product name: METABLEN (trademark) S-2030, manufactured by Mitsubishi Chemical Corporation)
▪Impact modifier (E3): core/shell structure including a silicone-acrylic copolymer serving as a core layer and a glycidyl methacrylate-modified methyl methacrylate polymer serving as a shell layer (product name: METABLEN (trademark) S-2200, manufactured by Mitsubishi Chemical Corporation)

### [Other Resin Component]

▪Maleic anhydride-modified hydrogenated styrene-based thermoplastic elastomer (F1): product name: "Tuftec M1943", manufactured by Asahi Kasei Corporation, MFR (load: 2.16 kg, temperature: 230°C)=6.5 g/10 min
▪Maleic anhydride-modified low-density polyethylene (F2): product name: "Plexar PX800", manufactured by LyondellBasell Industries, MFR (load: 2.16 kg, temperature: 190°C)=2.4 g/10 min

### [Examples 1 to 24]

The whole amounts of the polyester-based resin, the polyolefin-based resin, the glycidyl group-containing resin, and at least one kind selected from the group consisting of: the polycarbodiimide; and the impact modifier were dry blended as shown in Table 1 or 2, and fed to a twin-screw extruder through use of a metering feeder. The polyester-based resin was dehumidified and dried before the dry blending.

After melt-kneading, the molten resin was discharged from a strand die in a strand shape, passed through a water tank for cooling, and then cut with a pelletizer in a pellet shape. Thus, polyester-based resin compositions (1) to (24) were obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Tables 1 and 2.

### [Comparative Example 1]

The whole amounts of the polyester-based resin (A1), the polyolefin-based resin (B2), the polycarbodiimide (D1), and the maleic anhydride-modified hydrogenated styrene-based thermoplastic elastomer (F1) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C1) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 2]

The whole amounts of the polyester-based resin (A1) and the polycarbodiimide (D3) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C2) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 3]

The whole amounts of the polyester-based resin (A2) and the polyolefin-based resin (B1) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C3) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 4]

The whole amounts of the polyester-based resin (A2), the polyolefin-based resin (B1), and the polycarbodiimide (D1) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C4) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 5]

The whole amounts of the polyester-based resin (A2), the polyolefin-based resin (B1), and the glycidyl group-containing resin (C4) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C5) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 6]

The whole amounts of the polyester-based resin (A1) and the glycidyl group-containing resin (C7) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C6) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 7]

The whole amounts of the polyester-based resin (A1), the polyolefin-based resin (B2), and the maleic anhydride-modified low-density polyethylene (F2) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C7) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 8]

The whole amounts of the polyester-based resin (A2), the polyolefin-based resin (B5), the polycarbodiimide (D2), and the impact modifier (E2) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C8) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 9]

The whole amounts of the polyester-based resin (A2), the polycarbodiimide (D2), and the impact modifier (E2) were dry blended as shown in Table 3, and fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C9) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the materials was set to 4 kg/hr.

The results are shown in Table 3.

### [Comparative Example 10]

The polyester-based resin (A2) as shown in Table 3 was fed to a twin-screw extruder through use of a metering feeder.

After melt-kneading, the molten resin was discharged from a strand die in a strand shape, passed through a water tank for cooling, and then cut with a pelletizer in a pellet shape. Thus, a polyester-based resin composition (C10) was obtained.

A twin-screw extruder with a screw diameter of 15 mm and a L/D of 45 was used as the twin-screw extruder. As a kneading temperature, the highest setting temperature of a barrel portion was set to 275°C, and the highest setting temperature of a die portion was set to 260°C. A screw rotation speed was set to 300 rpm, and the feed rate of the material was set to 4 kg/hr.

The results are shown in Table 3.

**[Table 1]**

| Table 1-1 | | | | |
|---|---|---|---|---|
| | Material | Product name | Composition and features | MFR 2.16 kg 190°C (g/10 min) |
| Polyester-based resin (part(s) by weight) | (A1) | Recycled PET | MFR (2.16 kg, 285°C)=212 (g/10 min) | |
| | (A2) | Recycled PET | MFR (2.16 kg, 285°C)=180 (g/10 min) | |
| | (A3) | Recycled PET | MFR (2.16 kg, 285°C)=121 (g/10 min) | |
| Polyolefin-based resin (part(s) by weight) | (B1) | Queo8230 | C8-based LLDPE | 30 |
| | (B2) | Queo8201 | C8-based LLDPE | 1.1 |
| | (B3) | NOVATEC LL UJ580 | C4-based LLDPE | 20 |
| | (B4) | NOVATEC LL UJ960 | C4-based LLDPE | 5 |
| | (B5) | NOVATEC LL UF230 | C4-based LLDPE | 1 |
| Glycidyl group-containing resin (part(s) by weight) | (C1) | BONDFAST CG5001 | E/GMA=81/19 | 380 |
| | (C2) | BONDFAST BF-30C | E/GMA=81/19 | 30 |
| | (C3) | BONDFAST BF-E | E/GMA=88/12 | 3 |
| | (C4) | BONDFAST BF-2C | E/GMA=94/6 | 3 |
| | (C5) | BONDFAST BF-7M | E/GMA/MA=67/6/27 | 7 |
| | (C6) | BONDFAST BF-7B | E/GMA/VA=83/12/5 | 7 |
| | (C7) | ET100 | E/GMA/H=95/2/3 | 1 |
| Polycarbodiimide (part(s) by weight) | (D1) | Stabaxol P100 | Aromatic type | |
| | (D2) | CARBODILITE LA-1 | Alicyclic type | |
| | (D3) | CARBODILITE HMV-15CA | Alicyclic type | |
| Impact modifier (part(s) by weight) | (E1) | KaneAce FM-40 | Core/shell type | |
| | (E2) | METABLEN S-2030 | Core/shell type | |
| | (E3) | METABLEN S-2200 | Core/shell type | |
| Other resin component (part(s) by weight) | (F1) | Tuftec M1943 | Maleic anhydride-modified SEBS | 6.5 (230°C) |
| | (F2) | Plexar PX800 | Maleic anhydride-modified LLDPE | 2.4 |
| Physical properties | Melting properties | MFR (2.16 kg, 285°C) (g/10 min) | | |
| | Mechanical properties | Tensile elongation [Measurement A] (%) | | |
| | | Tensile elongation [Measurement B] (%) | | |
| | | Izod impact value (KJ/m²) | | |
| | Evaluation of injection molded article | | | |

**Table 1-2**

| | Material | Example 1 | Example 2 | Example 3 | Example 4 | Example 5 | Example 6 |
|---|---|---|---|---|---|---|---|
| Polyester-based resin (part(s) by weight) | (A1) | | | | 85 | 85 | 85 |
| | (A2) | | | | | | |
| | (A3) | 85 | 85 | 85 | | | |
| Polyolefin-based resin (part(s) by weight) | (B1) | | | | | | |
| | (B2) | | | | | | |
| | (B3) | | | | | | 12 |
| | (B4) | | | | | 12 | |
| | (B5) | 12 | 12 | 12 | 12 | | |
| Glycidyl group-containing resin (part(s) by weight) | (C1) | 3 | 3 | 3 | 3 | 3 | 3 |
| | (C2) | | | | | | |
| | (C3) | | | | | | |
| | (C4) | | | | | | |
| | (C5) | | | | | | |
| | (C6) | | | | | | |
| | (C7) | | | | | | |
| Polycarbodiimide (part(s) by weight) | (D1) | | | | | | |
| | (D2) | 0.6 | 0.9 | 0.3 | 0.3 | 0.3 | 0.3 |
| | (D3) | | | | | | |
| Impact modifier (part(s) by weight) | (E1) | | | | | | |
| | (E2) | | | | | | |
| | (E3) | | | | | | |
| Other resin component (part(s) by weight) | (F1) | | | | | | |
| | (F2) | | | | | | |
| Physical properties | MFR (2.16 kg, 285°C) (g/10 min) | 17 | 11 | 20 | 71 | 50 | 31 |
| | Tensile elongation [Measure ment A] (%) | 80 | 180 | 11 | 6 | 7 | 7 |
| | Tensile elongation [Measure ment B] (%) | - | - | - | - | - | - |
| | Izod impact value (KJ/m²) | - | - | - | - | - | - |
| | Evaluation of injection molded article | ○ | ○ | ○ | - | - | - |

**Table 1-3**

| | Material | Example 7 | Example 8 | Example 9 | Example 10 | Example 11 | Example 12 |
|---|---|---|---|---|---|---|---|
| Polyester-based resin (part(s) by weight) | (A1) | 85 | | 87 | | | |
| | (A2) | | 85 | | 85 | 85 | 85 |
| | (A3) | | | | | | |
| Polyolefin-based resin (part(s) by weight) | (B1) | | 12 | 10 | 12 | 12 | 12 |
| | (B2) | | | | | | |
| | (B3) | | | | | | |
| | (B4) | 12 | | | | | |
| | (B5) | | | | | | |
| Glycidyl group-containing resin (part(s) by weight) | (C1) | 3 | | | | | |
| | (C2) | | 3 | | | | |
| | (C3) | | | 3 | | | |
| | (C4) | | | | 3 | | |
| | (C5) | | | | | 3 | |
| | (C6) | | | | | | 3 |
| | (C7) | | | | | | |
| Polycarbodiimide (part(s) by weight) | (D1) | | 0.5 | 0.5 | 0.5 | 0.5 | 0.5 |
| | (D2) | | | | | | |
| | (D3) | 1 | | | | | |
| Impact modifier (part(s) by weight) | (E1) | | | | | | |
| | (E2) | | | | | | |
| | (E3) | | | | | | |
| Other resin component (part(s) by weight) | (F1) | | | | | | |
| | (F2) | | | | | | |
| Physical properties | MFR (2.16 kg, 285°C) (g/10 min) | 19 | 22 | 88 | 37 | 27 | 53 |
| | Tensile elongation [Measureme nt A] (%) | 130 | 15 | 10 | 10 | 15 | 12 |
| | Tensile elongation [Measureme nt B] (%) | - | - | - | - | - | - |
| | Izod impact value (KJ/m²) | - | - | - | - | - | - |
| | Evaluation of injection molded article | - | - | - | - | - | - |

**[Table 2]**

| Table 2-1 | | | | |
|---|---|---|---|---|
| | Material | Product name | Composition and features | MFR 2.16 kg 190°C (g/10 min) |
| Polyester-based resin (part(s) by weight) | (A1) | Recycled PET | MFR (2.16 kg, 285°C)=212 (g/10 min) | |
| | (A2) | Recycled PET | MFR (2.16 kg, 285°C)=180 (g/10 min) | |
| | (A3) | Recycled PET | MFR (2.16 kg, 285°C)=121 (g/10 min) | |
| Polyolefin-based resin (part(s) by weight) | (B1) | Queo8230 | C8-based LLDPE | 30 |
| | (B2) | Queo8201 | C8-based LLDPE | 1.1 |
| | (B3) | NOVATEC LL UJ580 | C4-based LLDPE | 20 |
| | (B4) | NOVATEC LL UJ960 | C4-based LLDPE | 5 |
| | (B5) | NOVATEC LL UF230 | C4-based LLDPE | 1 |
| Glycidyl group-containing resin (part(s) by weight) | (C1) | BONDFAST CG5001 | E/GMA=81/19 | 380 |
| | (C2) | BONDFAST BF-30C | E/GMA=81/19 | 30 |
| | (C3) | BONDFAST BF-E | E/GMA=88/12 | 3 |
| | (C4) | BONDFAST BF-2C | E/GMA=94/6 | 3 |
| | (C5) | BONDFAST BF-7M | E/GMA/MA=67/6/27 | 7 |
| | (C6) | BONDFAST BF-7B | E/GMA/VA=83/12/5 | 7 |
| | (C7) | ET100 | E/GMA/H=95/2/3 | 1 |
| Polycarbodiimide (part(s) by weight) | (D1) | Stabaxol P100 | Aromatic type | |
| | (D2) | CARBODILITE LA-1 | Alicyclic type | |
| | (D3) | CARBODILITE HMV-15CA | Alicyclic type | |
| Impact modifier (part(s) by weight) | (E1) | KaneAce FM-40 | Core/shell type | |
| | (E2) | METABLEN S-2030 | Core/shell type | |
| | (E3) | METABLEN S-2200 | Core/shell type | |
| Other resin component (part(s) by weight) | (F1) | Tuftec M1943 | Maleic anhydride-modified SEBS | 6.5 (230°C) |
| | (F2) | Plexar PX800 | Maleic anhydride-modified LLDPE | 2.4 |
| Physical properties | Melting properties | MFR (2.16 kg, 285°C) (g/10 min) | | |
| | Mechanica l properties | Tensile elongation [Measurement A] (%) | | |
| | | Tensile elongation [Measurement B] (%) | | |
| | | Izod impact value (KJ/m²) | | |
| | Evaluation of injection molded article | | | |

**Table 2-2**

| | Material | Example 13 | Example 14 | Example 15 | Example 16 | Example 17 | Example 18 |
|---|---|---|---|---|---|---|---|
| Polyester-based resin (part(s) by weight) | (A1) | | | | | | |
| | (A2) | 75 | | 85 | 95.2 | 90.4 | 95.7 |
| | (A3) | | 80 | | | | |
| Polyolefin-based resin (part(s) by weight) | (B1) | 16 | 14 | | | | |
| | (B2) | | | | | | |
| | (B3) | | | | | | |
| | (B4) | | | | | | |
| | (B5) | | | 10 | 3.2 | 6.4 | 3.2 |
| Glycidyl group-containing resin (part(s) by weight) | (C1) | 9 | | 5 | 1.6 | 3.2 | 1.1 |
| | (C2) | | | | | | |
| | (C3) | | | | | | |
| | (C4) | | | | | | |
| | (C5) | | | | | | |
| | (C6) | | | | | | |
| | (C7) | | 6 | | | | |
| Polycarbodiimide (part(s) by weight) | (D1) | 0.5 | 0.5 | | | | |
| | (D2) | | | 0.2 | 0.3 | 0.3 | 0.3 |
| | (D3) | | | | | | |
| Impact modifier (part(s) by weight) | (E1) | | | | 6.4 | | |
| | (E2) | | | | | | 6.4 |
| | (E3) | | | | | 6.4 | |
| Other resin component (part(s) by weight) | (F1) | | | | | | |
| | (F2) | | | | | | |
| Physical properties | MFR (2.16 kg, 285°C) (g/10 min) | 0.8 | 82 | 16 | 48 | 22 | 76 |
| | Tensile elongation [Measure ment A] (%) | 24 | 8 | - | - | - | - |
| | Tensile elongation [Measure ment B] (%) | - | - | 260 | 285 | 231 | 253 |
| | Izod impact value (KJ/m²) | - | - | 11.0 | 12.3 | 14.0 | 11.6 |
| | Evaluation of injection molded article | - | - | - | - | - | - |

**Table 2-3**

| | Material | Example 19 | Example 20 | Example 21 | Example 22 | Example 23 | Example 24 |
|---|---|---|---|---|---|---|---|
| Polyester-based resin (part(s) by weight) | (A1) | | | | | | |
| | (A2) | 95.2 | 96.7 | 84.8 | 82.9 | 80.8 | 86.7 |
| | (A3) | | | | | | |
| Polyolefin-based resin (part(s) by weight) | (B1) | | | | | | |
| | (B2) | | | | | | |
| | (B3) | | | | | | |
| | (B4) | | | | | | |
| | (B5) | 3.2 | 2.2 | 9.1 | 16.5 | 12.1 | 10.7 |
| Glycidyl group-containing resin (part(s) by weight) | (C1) | 1.6 | 1.1 | 6.1 | 0.6 | 7.1 | 2.7 |
| | (C2) | | | | | | |
| | (C3) | | | | | | |
| | (C4) | | | | | | |
| | (C5) | | | | | | |
| | (C6) | | | | | | |
| | (C7) | | | | | | |
| Polycarbodiimide (part(s) by weight) | (D1) | | | | | | |
| | (D2) | | | 0.2 | 0.6 | | |
| | (D3) | | | | | | |
| Impact modifier (part(s) by weight) | (E1) | | | | 22 | | 33.4 |
| | (E2) | 6.4 | 8.7 | | | | |
| | (E3) | | | 1 | | 1 | |
| Other resin component (part(s) by weight) | (F1) | | | | | | |
| | (F2) | | | | | | |
| Physical properties | MFR (2.16 kg, 285°C) (g/10 min) | 95 | 112 | 9.1 | 8.4 | 1.7 | 1.3 |
| | Tensile elongation [Measure ment A] (%) | - | - | - | - | - | - |
| | Tensile elongation [Measure ment B] (%) | 275 | 282 | 198 | 170 | 128 | 241 |
| | Izod impact value (KJ/m²) | 11.3 | 10.3 | 13.4 | 19.8 | 16.0 | 10.9 |
| | Evaluation of injection molded article | - | - | - | - | - | - |

**[Table 3]**

| Table 3-1 | | | | |
|---|---|---|---|---|
| | Material | Product name | Composition and features | MFR 2.16 kg 190°C (g/10 min) |
| Polyester-based resin (part(s) by weight) | (A1) | Recycled PET | MFR (2.16 kg, 285°C)=212 (g/10 min) | |
| | (A2) | Recycled PET | MFR (2.16 kg, 285°C)=180 (g/10 min) | |
| | (A3) | Recycled PET | MFR (2.16 kg, 285°C)=121 (g/10 min) | |
| Polyolefin-based resin (part(s) by weight) | (B1) | Queo8230 | C8-based LLDPE | 30 |
| | (B2) | Queo8201 | C8-based LLDPE | 1.1 |
| | (B3) | NOVATEC LL UJ580 | C4-based LLDPE | 20 |
| | (B4) | NOVATEC LL UJ960 | C4-based LLDPE | 5 |
| | (B5) | NOVATEC LL UF230 | C4-based LLDPE | 1 |
| Glycidyl group-containing resin (part(s) by weight) | (C1) | BONDFAST CG5001 | E/GMA=81/19 | 380 |
| | (C2) | BONDFAST BF-30C | E/GMA=81/19 | 30 |
| | (C3) | BONDFAST BF-E | E/GMA=88/12 | 3 |
| | (C4) | BONDFAST BF-2C | E/GMA=94/6 | 3 |
| | (C5) | BONDFAST BF-7M | E/GMA/MA=67/6/27 | 7 |
| | (C6) | BONDFAST BF-7B | E/GMA/VA=83/12/5 | 7 |
| | (C7) | ET100 | E/GMA/H=95/2/3 | 1 |
| Polycarbodiimide (part(s) by weight) | (D1) | Stabaxol P100 | Aromatic type | |
| | (D2) | CARBODILITE LA-1 | Alicyclic type | |
| | (D3) | CARBODILITE HMV-15CA | Alicyclic type | |
| Impact modifier (part(s) by weight) | (E1) | KaneAce FM-40 | Core/shell type | |
| | (E2) | METABLEN S-2030 | Core/shell type | |
| | (E3) | METABLEN S-2200 | Core/shell type | |
| Other resin component (part(s) by weight) | (F1) | Tuftec M1943 | Maleic anhydride-modified SEBS | 6.5 (230°C) |
| | (F2) | Plexar PX800 | Maleic anhydride-modified LLDPE | 2.4 |
| Physical properties | Melting properties | MFR (2.16 kg, 285°C) (g/10 min) | | |
| | Mechanical properties | Tensile elongation [Measurement A] (%) | | |
| | | Izod impact value (KJ/m²) | | |
| | Evaluation of injection molded article | | | |

**Table 3-2**

| | Material | Comparativ e Example 1 | Comparative Example 2 | Comparative Example 3 | Comparative Example 4 | Comparative Example 5 |
|---|---|---|---|---|---|---|
| Polyester-based resin (part(s) by weight) | (A1) | 87 | 100 | | | |
| | (A2) | | | 85 | 85 | 85 |
| | (A3) | | | | | |
| Polyolefin-based resin (part(s) by weight) | (B1) | | | 15 | 15 | 12 |
| | (B2) | 10 | | | | |
| | (B3) | | | | | |
| | (B4) | | | | | |
| | (B5) | | | | | |
| Glycidyl group-containing resin (part(s) by weight) | (C1) | | | | | |
| | (C2) | | | | | |
| | (C3) | | | | | |
| | (C4) | | | | | 3 |
| | (C5) | | | | | |
| | (C6) | | | | | |
| | (C7) | | | | | |
| Polycarbodiimide (part(s) by weight) | (D1) | 0.5 | | | 0.3 | |
| | (D2) | | | | | |
| | (D3) | | 1 | | | |
| Impact modifier (part(s) by weight) | (E1) | | | | | |
| | (E2) | | | | | |
| | (E3) | | | | | |
| Other resin component (part(s) by weight) | (F1) | 3 | | | | |
| | (F2) | | | | | |
| Physical properties | MFR (2.16 kg, 285°C) (g/10 min) | 173 | 124 | 169 | 149 | 98 |
| | Tensile elongation [Measurement A] (%) | 3 | 3 | 4 | 3 | 3 |
| | Izod impact value (KJ/m²) | - | - | - | - | - |
| | Evaluation of injection molded article | - | - | - | - | × |

**Table 3-3**

| | Material | Comparative Example 6 | Comparative Example 7 | Comparative Example 8 | Comparative Example 9 | Comparative Example 10 |
|---|---|---|---|---|---|---|
| Polyester-based resin (part(s) by weight) | (A1) | 90 | 87 | | | |
| | (A2) | | | 89.5 | 90 | 100 |
| | (A3) | | | | | |
| Polyolefin-based resin (part(s) by weight) | (B1) | | | | | |
| | (B2) | | 10 | | | |
| | (B3) | | | | | |
| | (B4) | | | | | |
| | (B5) | | | 4.5 | | |
| Glycidyl group-containing resin (part(s) by weight) | (C1) | | | | | |
| | (C2) | | | | | |
| | (C3) | | | | | |
| | (C4) | | | | | |
| | (C5) | | | | | |
| | (C6) | | | | | |
| | (C7) | 10 | | | | |
| Polycarbodiimide (part(s) by weight) | (D1) | | | | | |
| | (D2) | | | 0.3 | 0.3 | |
| | (D3) | | | | | |
| Impact modifier (part(s) by weight) | (E1) | | | | | |
| | (E2) | | | 6 | 10 | |
| | (E3) | | | | | |
| Other resin component (part(s) by weight) | (F1) | | | | | |
| | (F2) | | 3 | | | |
| Physical properties | MFR (2.16 kg, 285°C) (g/10 min) | 93 | 194 | 122 | 131 | 210 |
| | **Tensile elongation** [Measurement A] (%) | 4 | 4 | - | - | - |
| | Izod impact value (KJ/m²) | - | - | 6.2 | 8.2 | 2.8 |
| | Evaluation of injection molded article | - | - | - | - | - |

### Industrial Applicability

According to the present invention, there can be provided a polyester-based resin composition capable of expressing excellent melting properties and excellent mechanical properties, and hence the polyester-based resin composition capable of expressing excellent melting properties and excellent mechanical properties can be formed by, for example, using a recycled PET as a raw material, and can be suitably utilized for PET recycling.

## Claims

1. A polyester-based resin composition, comprising:
a polyester-based resin (A);
a polyolefin-based resin (B);
a glycidyl group-containing resin (C); and
a polycarbodiimide (D),
wherein the glycidyl group-containing resin (C) contains 2 wt% to 30 wt% of a glycidyl methacrylate unit in a molecule thereof.

2. The polyester-based resin composition according to claim 1, wherein the glycidyl group-containing resin (C) has a MFR at a temperature of 190°C and a load of 2.16 kg of from 1 g/10 min to 500 g/10 min.

3. The polyester-based resin composition according to claim 1, wherein the glycidyl group-containing resin (C) contains an ethylene unit.

4. The polyester-based resin composition according to claim 1, wherein a total content ratio of the polyester-based resin (A), the polyolefin-based resin (B), the glycidyl group-containing resin (C), and the polycarbodiimide (D) in the polyester-based resin composition is more than 90 wt%.

5. The polyester-based resin composition according to claim 1, wherein a content ratio of the polyester-based resin (A) in a sum of the polyester-based resin (A), the polyolefin-based resin (B), and the glycidyl group-containing resin (C) is from 50 wt% to 98 wt%.

6. The polyester-based resin composition according to claim 1, wherein a content ratio of the polyolefin-based resin (B) in a sum of the polyester-based resin (A), the polyolefin-based resin (B), and the glycidyl group-containing resin (C) is from 1 wt% to 45 wt%.

7. The polyester-based resin composition according to claim 1, wherein a content ratio of the glycidyl group-containing resin (C) in a sum of the polyester-based resin (A), the polyolefin-based resin (B), and the glycidyl group-containing resin (C) is from 0.1 wt% to 20 wt%.

8. The polyester-based resin composition according to claim 1, wherein an amount of the polycarbodiimide (D) is from 0.1 part by weight to 3.0 parts by weight when a total amount of the polyester-based resin (A), the polyolefin-based resin (B), and the glycidyl group-containing resin (C) is 100 parts by weight.

9. The polyester-based resin composition according to claim 1, wherein the polyester-based resin (A) has a MFR at a temperature of 285°C and a load of 2.16 kg of from 100 g/10 min to 300 g/10 min.

10. The polyester-based resin composition according to claim 1, wherein the polyester-based resin (A) is polyethylene terephthalate.

11. The polyester-based resin composition according to claim 1, wherein the polyolefin-based resin (B) is an ethylene-α-olefin copolymer.

12. The polyester-based resin composition according to claim 11, wherein the polyolefin-based resin (B) is a linear low-density polyethylene.

13. The polyester-based resin composition according to claim 1, wherein the polyolefin-based resin (B) has a MFR at a temperature of 190°C and a load of 2.16 kg of from 0.5 g/10 min to 50 g/10 min.

14. The polyester-based resin composition according to claim 1, wherein the polycarbodiimide (D) has a weight-average molecular weight of from 500 to 6000.

15. The polyester-based resin composition according to claim 1, wherein the polyester-based resin composition comprises 0.5 wt% to 30 wt% of an impact modifier (E).

16. The polyester-based resin composition according to claim 15, wherein the impact modifier (E) is a core/shell-type structure having a core portion and a shell portion, and the core portion contains a rubber component.

17. A polyester-based resin composition, comprising:
a polyester-based resin (A);
a polyolefin-based resin (B);
a glycidyl group-containing resin (C); and
an impact modifier (E),
wherein the glycidyl group-containing resin (C) contains 2 wt% to 30 wt% of a glycidyl methacrylate unit in a molecule thereof.

18. A polyester-based resin molded article obtained by molding the polyester-based resin composition of any one of claims 1 to 17 by injection molding.
